# EUROPEAN PATENT APPLICATION

(11) **EP 2 219 141 A1**
(43) Date of publication of application: **18.08.2010**
(21) Application number: 10152742.2
(22) Date of filing: 05.02.2010
(51) Int. Cl.: G06Q 10/00

(54) **Information processing apparatus, information processing method, and program**

(30) Priority: 13.02.2009 JP 2009032025
(71) Applicant: Sony Corporation, Tokyo 108-0075 (JP)
(72) Inventor: Ito, Yoshio, Tokyo 108-0075 (JP); Kida, Tetsuro, Tokyo 108-0075 (JP)
(74) Representative: Beder, Jens

(57) **Abstract**

A information processing apparatus including an inquiry section configured to make an inquiry to a server about desired search information on the basis of setting information preliminarily input by a user operation, the server being connected to a network, a receiving section configured to receive the search information about which the inquiry section makes an inquiry to the server, and a notifying section configured to provide notification of the search information, which is received by the receiving section, at a predetermined timing.

## Description

### BACKGROUND OF THE INVENTION

### 1. Field of the Invention

The invention relates to an information processing apparatus, an information processing method and a program. In addition, the invention relates to an information processing apparatus, an information processing method and a program capable of providing, in real time, desired information on the basis of schedule information.

### 2. Description of the Related Art

Recently, users frequently manage their own schedules by using schedule management systems installed in PCs (Personal Computers) and mobile terminal devices. Schedule management systems are a type of software that runs on PCs, and users input schedule information to the schedule management systems, the schedule information including detailed schedules, location information, and time information.

In the above-mentioned schedule management system, by using schedule information input by a user, for example, a calendar-like schedule table on which respective pieces of schedule information are displayed on corresponding days on a monthly basis is prepared, and a corresponding schedule is displayed when an input schedule time draws near. In addition, by obtaining travel information from the input schedule information, a fare for a travel zone is searched for on the basis of transportation services used for travel and fares thereof (see a patent document 1: Japanese Unexamined Patent Application Publication No. 2002-245213). According to the patent document 1, transport expense for the user's travel is automatically calculated on the basis of the schedule information input by the user and settled.

### SUMMARY OF THE INVENTION

Recently, with the connection of various kinds of devices such as PCs and mobile terminal devices to the Internet, various kinds of information have been made available. Users can search for transfer information and arrival times by inputting destinations and departure times to terminal devices connected to the Internet. If transfer information is automatically searched for on the basis of schedule information preliminary input by the users and is provided to the users, convenience for the users is improved.

In the above-mentioned patent document 1, fixed information relating to transport expense is searched for by obtaining information, which is related to the user's travel and unrelated to clock time, from the schedule information input by the user. However, it is difficult to search for and provide real-time information on the basis of schedule information corresponding to a current time. In view of the above-identified circumstances, it is therefore desirable to provide an information processing apparatus, an information processing method and a program capable of providing in real time desired information on the basis of preliminarily input setting information.

According to an embodiment of the present invention, there is provided an information processing apparatus including:
an inquiry section configured to make an inquiry to a server about desired search information on the basis of setting information preliminarily input by a user operation, the server being connected to a network;
a receiving section configured to receive the search information about which the inquiry section makes an inquiry to the server; and
a notifying section configured to provide notification of the search information, which is received by the receiving section, at a predetermined timing.

In the above-mentioned configuration, the server connected to the network is inquired about the desired search information on the basis of the setting information preliminarily input by the user operation and the search information received from the server is provided notification of at a predetermined timing. Accordingly, the user can obtain the desired information in real time, simply by preliminarily inputting the setting information.

In addition, the information processing apparatus further includes an extraction section configured to extract predetermined information from the setting information preliminarily input by the user operation, the predetermined information being used by the inquiry section so as to inquire about the search information. Then, the inquiry section may make an inquiry to the server about the desired search information on the basis of the predetermined information extracted by the extraction section.

In addition, the notifying section may cause the search information to be displayed on a display device at a predetermined timing.

In addition, the receiving section receives other information in addition to the search information. Then, the inquiry section may make an inquiry to the server about the desired search information again when the receiving section receives information other than the search information.

In addition, when search information newly received by the receiving section is different from previously received search information, the notifying section may provide notification of the newly received search information.

In addition, the setting information preliminarily input by the user operation includes the user's schedule information. Then, the inquiry section may inquire about predetermined guidance information on the basis of the schedule information included in the setting information.

In addition, the extraction section may extract the user's schedule information according to a current time from the setting information.

In addition, the notifying section may cause a calendar and predetermined guidance information to be displayed on the display device, the calendar including the user's schedule information, the predetermined guidance information being based on the schedule information inquired about by the inquiry section.

In addition, according to an embodiment of the present invention, there is provided an information processing method including:
making an inquiry to a server about desired search information on the basis of setting information preliminarily input by a user operation, the server being connected to a network;
receiving the search information about which the server was inquired; and
providing notification of the received search information at a predetermined timing.

In addition, according to an embodiment of the present invention, there is provided a recording medium storing a computer readable program configured to cause an information processing apparatus to execute processing, the information processing apparatus including:
an inquiry section configured to make an inquiry to a server about desired search information on the basis of setting information preliminarily input by a user operation, the server being connected to a network;
a receiving section configured to receive the search information about which the inquiry section makes an inquiry to the server; and
a notifying section configured to provide notification of the search information, which is received by the receiving section, at a predetermined timing.

Therefore, according to an embodiment of the present invention, desired information may be provided in real time on the basis of the preliminarily input setting information.

### BRIEF DESCRIPTION OF THE DRAWINGS

Figs. 1A and 1B are diagrams schematically illustrating an information processing apparatus according to an embodiment of the present invention;
Fig. 2 is a block diagram illustrating a hardware configuration of the information processing apparatus according to the embodiment;
Fig. 3 is a block diagram illustrating a functional configuration of the information processing apparatus according to the embodiment;
Fig. 4 is a flowchart illustrating an information processing method performed in the information processing apparatus according to the embodiment;
Fig. 5 is a flowchart illustrating an information processing method performed in the information processing apparatus according to the embodiment;
Fig. 6 is an explanatory diagram illustrating an inquiry method performed in the information processing apparatus according to the embodiment;
Fig. 7 is an explanatory diagram illustrating a display example displayed in the information processing apparatus according to the embodiment;
Fig. 8 is an explanatory diagram illustrating a display example displayed in the information processing apparatus according to the embodiment;
Fig. 9 is an explanatory diagram illustrating a display example displayed in the information processing apparatus according to the embodiment;
Fig. 10 is an explanatory diagram illustrating a display example displayed in the information processing apparatus according to the embodiment; and
Fig. 11 is an explanatory diagram illustrating a display example displayed in the information processing apparatus according to the embodiment.

### DESCRIPTION OF THE PREFERRED EMBODIMENTS

Hereinafter, preferred embodiments of the present invention will be described with reference to figures. In addition, in the specification and the figures, compositional units having virtually identical functions and configurations will be assigned with the same number and repeated description will be omitted.

In addition, the preferred embodiments will be described in the sequence as below.
[1] object of the embodiments
[2] brief overview of an information processing apparatus
[3] hardware configuration of the information processing apparatus
[4] functional configuration of the information processing apparatus
[5] operations of the information processing apparatus
[6] display examples of a display device coordinated with the information processing apparatus

### [1] Object of Embodiments

First, the object of the embodiments according to the present invention will be described. Users frequently manage their own schedules by using schedule management systems installed in PCs (Personal Computers) and mobile terminal devices. Schedule management systems are a type of software that runs on PCs, and the users input schedule information to the schedule management systems, the schedule information including detailed schedules, location information, and time information.

In the above-mentioned schedule management system, by using schedule information input by a user, for example, a calendar-like schedule table on which respective pieces of schedule information are displayed on corresponding days on a monthly basis is prepared, and a corresponding schedule is displayed when an input schedule time draws near. In addition, by obtaining travel information from the input schedule information, a fare for a travel zone is searched for on the basis of transportation services used for travel and fares thereof. According to such a search technique used to search for a fare, the transport expense for the user's travel is automatically calculated on the basis of the schedule information input by the user and settled.

Recently, with the connection of various kinds of devices such as PCs and mobile terminal devices to the Internet, various kinds of information have been made available. Users can search transfer information and arrival times by inputting destinations and departure times to terminal devices connected to the Internet. If transfer information is automatically searched for on the basis of schedule information preliminary input by the users and is provided to the users, convenience for the users is improved.

In the above-mentioned search technique used to search for a fare, fixed information relating to transport expense is searched for by obtaining information, which is related to the user's travel and unrelated to clock time, from the schedule information input by the user. However, it is difficult to search for and provide real-time information on the basis of schedule information corresponding to a current time.

In view of the above-identified circumstances, there is provided an information processing apparatus 10 according to an embodiment of the present invention. The information processing apparatus 10 according to the embodiment can provide in real time desired information on the basis of preliminarily input setting information.

### [2] Brief Overview of Information Processing Apparatus

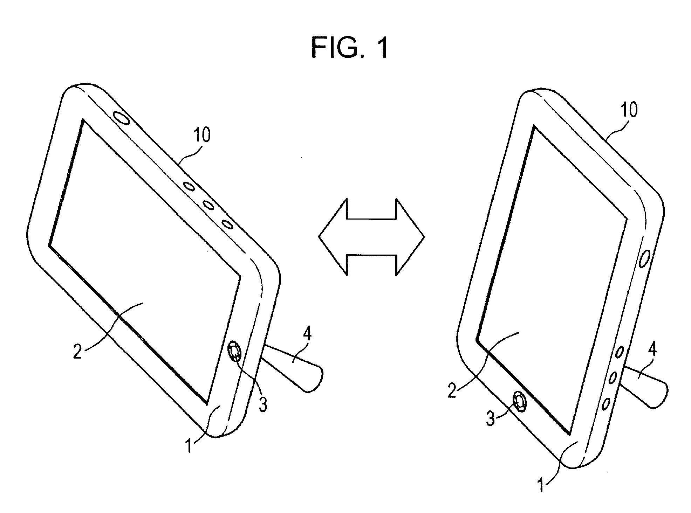

Next, a brief overview of the information processing apparatus 10 according to an embodiment of the present invention will be described with reference to Figs. 1A and 1B. Figs. 1A and 1B are diagrams schematically illustrating the information processing apparatus 10 according to the embodiment. While the information processing apparatus 10 which has a photo-frame-like shape will be described in the embodiment, the information processing apparatus 10 is not limited to such an example. For example, the embodiment can be applied to information processing terminals, which include display devices, such as mobile phones, PDAs (Personal Digital Assistants), and small PCs. In addition, a display device may be provided separately from the information processing apparatus 10.

As shown in Figs. 1A and 1B, for example the information processing apparatus 10 includes a chassis 1 including a frame, a display section 2, an operating button 3, and a supporting leg 4. The chassis 1 includes the frame surrounding the display section 2 and an operating means such as the operating button 3 is provided on the frame. In addition, a manually operable touch sensor and switch and a lamp are provided on the frame. In addition, a communication device, which is used to connect to the Internet, and a drive, which is used to read and write information from and onto a memory card, are provided in the frame.

The display section 2 is a display used to display content such as images and text. As the display section 2, for example, a CRT (Cathode Ray Tube) display device, a liquid crystal display (LCD) device, and an OLED (Organic Light Emitting Display) device may be used.

The supporting leg 4 is mounted on the chassis 1 and supports the chassis 1 so that the display section 2 slants upward. In addition, since the supporting leg 4 supports the chassis 1, the chassis 1 can be set on its side or upright.

In the embodiment, the information processing apparatus 10 has a photo-frame-like shape as shown in Figs. 1A and 1B, and a user can hold the chassis 1 of the information processing apparatus 10 in his hand and easily set the chassis 1 on its side or upright. In addition, the information processing apparatus 10 includes a tilt sensor (not shown in Figs. 1A and 1B) used to sense tilt. The information processing apparatus 10 may detect, by using the tilt sensor, whether the chassis 1 is set on its side or upright and display content according to the tilt of the chassis 1.

### [3] Hardware configuration of Information Processing Apparatus

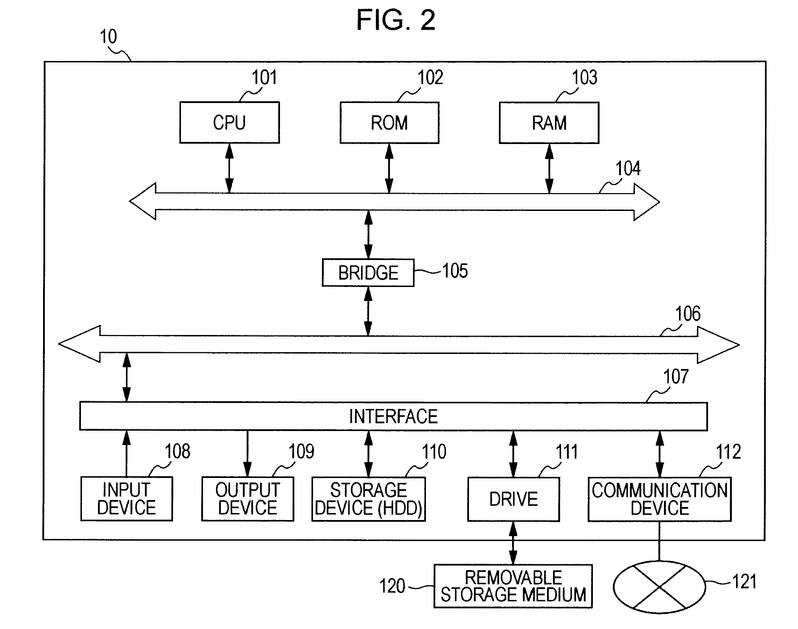

A brief overview of the information processing apparatus 10 was described above. Next, a hardware configuration of the information processing apparatus 10 will be described with reference to Fig. 2. Fig. 2 is a block diagram illustrating the hardware configuration of the information processing apparatus 10 according to the embodiment.

Fig. 2 is an explanatory diagram illustrating the hardware configuration of the information processing apparatus 10 according to the embodiment. As shown in Fig. 2, the information processing apparatus 10 includes a CPU (Central Processing Unit) 101, a ROM (Read Only Memory) 102, a RAM (Random Access Memory) 103, a host bus 104, a bridge 105, an external bus 106, an interface 107, an input device 108, an output device 109, a storage device (HDD) 110, a drive 111, and a communication device 112.

The CPU 101 functions as an arithmetic processing device and a control device and controls an overall operation in the information processing apparatus 10 according to various kinds of programs. In addition, a microprocessor may be used as the CPU 101. The ROM 102 stores programs used by the CPU 101 and arithmetic parameters. The RAM 103 primarily stores programs executed by the CPU 101 and parameters arbitrarily varying in the executed programs. These components are connected with one another through the host bus 104 including the CPU bus.

The host bus 104 is connected to the external bus 106, such as a PCI (Peripheral Component Interconnect/Interface) bus, through the bridge 105. In addition, while the host bus 104, the bridge 105, and the external bus 106 are separately provided, functions of these buses and bridge may be implemented in one bus.

For example, the input device 108 includes an input means, which is used by a user so as to input information, such as a mouse, a keyboard, a touch panel, a button, a microphone, a switch, or a lever, and an input control circuit which generates an input signal on the basis of the user's input and outputs the generated input signal to the CPU 101. By operating the input device 108, the user of the information processing apparatus 10 can input various kinds of data to the information processing apparatus 10 and instruct the information processing apparatus 10 to perform processing.

When the information processing apparatus 10 has the photo-frame-like shape as shown in Figs. 1A and 1B, the user holds down the operating button provided on the frame and a corresponding part of a touch panel provided on the frame. By holding these operating sections down, the user can change content displayed on the display section 2 and select desired information.

For example, the output device 109 includes a display device such as a CRT (Cathode Ray Tube) display device, a liquid crystal display (LCD) device, an OLED (Organic Light Emitting Display) device, or a lamp, and an audio output device such as a speaker or a headphone. The display device displays, in text or image format, various kinds of information such as image data. On the other hand, the audio output device converts audio data to an audio signal and outputs the audio signal.

The storage device 110 is a device used to store data, the device being provided as an example of a memory section included in the information processing apparatus 10 according to the embodiment. The storage apparatus 110 may include a storage medium, a recording device used to record data in the storage medium, a read-out device used to read out data from the storage medium, and a delete device used to delete data recorded in the storage medium. The storage device 110 includes a HDD (Hard Disk Drive) for example. The storage device 110 drives a hard disk and stores programs executed by the CPU 101 and various kinds of data. In addition, the storage device 110 records content data such as images and text, metadata, and device data.

The drive 111 is a reader/writer used for a storage medium and built into or attached to the information processing apparatus 10. The drive 111 reads out information recorded in an attached removable storage medium 120 such as a magnetic disk, an optical disk, a magnetic optical disk, or a semiconductor memory and outputs the read-out information to the RAM 103.

For example, the communication device 112 is a communication interface including a communication device used to connect to a communication network 121. In addition, the communication device 112 may be a communication device compliant with a wireless LAN (Local Area Network), a communication device compliant with a wireless USB, or a wire communication device performing wire communication. The communication device 112 can obtain various kinds of information by connecting to the Internet through the communication network 121. In addition, content such as images can be displayed on the display section 2 with use of applications provided on the Internet.

### [4] Functional Configuration of Information Processing Apparatus

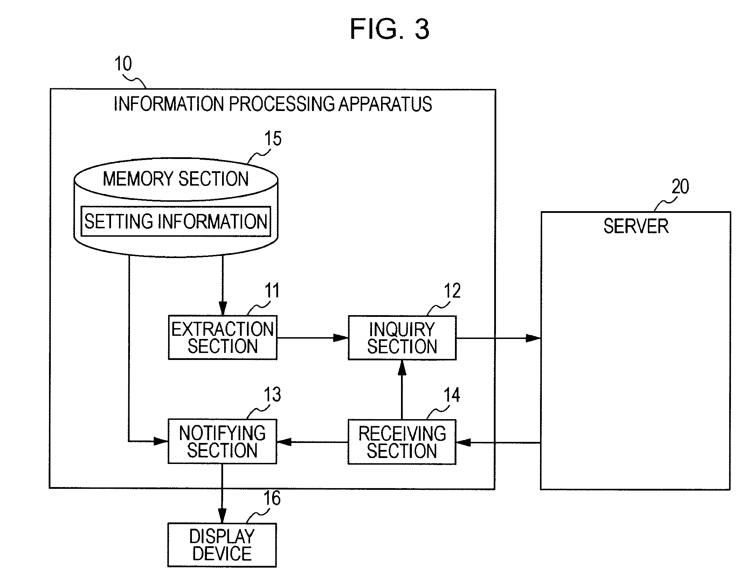

The hardware configuration of the information processing apparatus 10 was described above. Next, a functional configuration of the information processing apparatus 10 according to the embodiment will be described with reference to Fig. 3.

Fig. 3 is a block diagram illustrating the functional configuration of the information processing apparatus 10 according to the embodiment. The information processing apparatus 10 according to the embodiment mainly includes an extraction section 11, an inquiry section 12, a notifying section 13, a receiving section 14, and a memory section 15.

The memory section 15 stores setting information preliminarily input by a user operation. For example, the setting information input by the user includes the user's schedule information. The schedule information is input by using software such as a schedule management system and includes detailed schedules, location information, and time information. The schedule management system is installed in the information processing apparatus 10 and the schedule information may be input to the schedule management system by a user operation. In addition, when the schedule management system is installed in an apparatus provided separately from the information processing apparatus 10, only input schedule information may be stored in the memory section 15 provided in the information processing apparatus 10. Furthermore, schedule information managed in a server 20 may be received through a network and stored in the memory section 15, the server 20 being connected to the information processing apparatus 10.

In addition, for example, the setting information preliminarily input by the user includes routes to places that the user frequently goes to such as their workplace and school. By a user operation, a plurality of pieces of route information are stored as the setting information in the memory section 15, the route information including names of stations which the user goes to and transfers at en route from their home to their workplace, routes to locations that the user frequently goes to on their days off, and locations that the user stops at frequently.

The extraction section 11 has a function of extracting predetermined information from the setting information preliminarily input by a user operation and stored in the memory section 15, the predetermined information being used by the inquiry section 12 so as to make an inquiry to a server mentioned below. As mentioned above, the setting information includes the schedule information and the route information. The extraction section 11 may extract schedule information and route information, both corresponding to the current date and time, from the setting information stored in the memory section 15. For example, when the current time is seven a.m., schedule information around seven a.m. on a corresponding day is extracted. Then, when the corresponding day is a weekday, a commuting route usually used by the user is extracted. The extraction section 11 provides the inquiry section 12 with the extracted predetermined information.

The inquiry section 12 has a function of making an inquiry to the server 20 about desired search information on the basis of the setting information extracted by the extraction section 11, the server being connected to the inquiry section 12 through the network. For example, when schedule information and route information are extracted by the extraction section 11, the inquiry section 12 makes an inquiry to the server 20 about transfer guidance information by using different types of information, such as a date, a time, and a location, included in the schedule information, and route information. The inquiry section 12 may make an inquiry to the server 20 at predetermined intervals or on a date and at a time corresponding to the schedule information.

In addition, when the schedule information extracted by the extraction section 11 is day-off schedule information, the inquiry section 12 may make an inquiry to the server 20 about event information by using the information related to a date, a time, and a location. For example, when schedule information which indicates "meeting at Shibuya at 1:00 p.m. on Sunday" is provided, the inquiry section 12 may make an inquiry to the server 20 about information related to movies shown at Shibuya after 1:00 p.m. on the corresponding Sunday.

The receiving section 14 has a function of receiving the search information about which the inquiry section 12 makes an inquiry to the server 20. As described above, when the inquiry section 12 makes an inquiry to the server 20 about the transfer guidance information by using the schedule information and the route information, the receiving section 14 receives the transfer guidance information searched for by the server 20. Here, the transfer guidance information includes route information, which shows the shortest distance at the current time, and a railway timetable. The receiving section 14 provides the notifying section 13 with the received search information.

In addition, the receiving section 14 receives other information in addition to the search information received as a result of the inquiry made by the inquiry section 12. For example, the receiving section 14 may receive accident information of a train relating to a route included in the setting information and weather information on a current day. The receiving section 14 may receive accident information at fixed intervals or receive corresponding accident information when an accident happens. In addition, the receiving section 14 may receive the weather information at a predetermined time or in response to a user operation.

When the receiving section 14 receives information other than the search information received as a result of the inquiry made by the inquiry section 12, the receiving section 14 notifies the inquiry section 12 that the other information has been received. When the receiving section 14 notifies the inquiry section 12 that the other information has been received, the inquiry section 12 makes an inquiry to the server 20 about the search information again.

The notifying section 13 has a function of providing notification of, at a predetermined timing, the search information provided by the receiving section 14. Regarding the notification at the predetermined timing, the notification may be performed at 30-minute intervals or in response to a user operation, for example. In addition, when a predetermined application such as a calendar is started up, the notification may be performed. Furthermore, when information provided by the receiving section 14 is different from previously notified information, the notification of the provided information may be performed.

Here, regarding the notification performed by the notifying section 13, the notifying section 13 may cause a display device to display predetermined information or an audio device to output predetermined information as an audio signal. In addition, the notifying section 13 may cause the display device to display the predetermined information with an output buzzer sound. Content which the notifying section 13 causes the display device to display will be described hereinafter.

The notifying section 13 may calculate an estimated time at which the user leaves home from the route information received by the receiving section 14. In addition, when the receiving section 14 obtains information such as accident information, which is different from information at normal times, the notifying section 13 may calculate a departure time in light of the accident information and notify the user of the calculated departure time. In addition, when the notifying section 13 notifies the user of the accident information, the notifying section 13 may alert the user of the accident information by outputting an alarm tone. In addition, when the receiving section 14 provides accident information, the notifying section 13 may output an alarm at a time by a predetermined time earlier than at a usual time, the alarm being set to go off at the usual time.

In addition, the notifying section 13 may notify the user of accident information and delay information of a train on weekdays and notify the user of traffic jam information on holidays. Then, the notifying section 13 may notify the user of news flash provided by the server 20 in the evening. In addition, the notifying section 13 may cause the display device to display the schedule information stored in the memory section 15.

As described above, when the inquiry section 12 makes an inquiry to the server 20 about cinema information at a predetermined location on a holiday, the notifying section 13 causes the display device 16 to display the cinema information received from the server 20 as search information by the receiving section 14. In addition, the notifying section 13 may cause the display device 16 to display route information showing a route to a location at which an event is held and transfer guidance information in addition to event information such as the cinema information.

### [5] Operations of Information Processing Apparatus

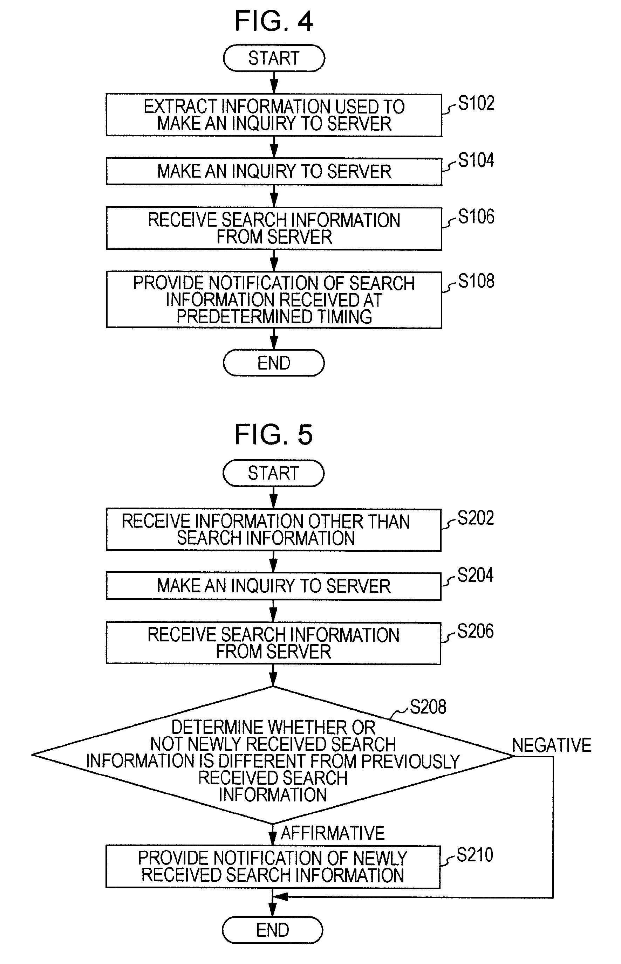

As above, the functional configuration of the information processing apparatus 10 was described. Next, operations of the information processing apparatus 10 will be described with reference to Figs. 4 and 5. Figs. 4 and 5 are flowcharts illustrating an information processing method performed in the information processing apparatus 10. As shown in Fig. 4, first the extraction section 11 extracts information, which the inquiry section 12 uses so as to make an inquiry to the server 20, from setting information stored in the memory section 15 (S102).

In Step S102, the information extracted by the extraction section 11 includes the user's schedule information and route information frequently used by the user. The setting information stored in the memory section 15 includes schedule information preliminarily input in response to a user operation by using software such as a schedule management system. The schedule information may be included in the setting information stored in the memory section 15, or the schedule information may be stored in a device provided separately from the information processing apparatus 10. In addition, the schedule information may be managed in a server connected to a network and the information processing apparatus 10 may receive schedule information on a corresponding date and time through the network.

Regarding the route information included in the setting information, a plurality of route information, for example, routes to places that the user frequently goes to such as their workplace and school and routes to locations that the user frequently goes to on their days off, are preliminarily input. Then, in Step S102, the information extracted by the extraction section 11 is provided to the inquiry section 12 and the inquiry section 12 makes an inquiry to the server 20 about desired search information (S104).

The search information, about which the inquiry section 12 makes an inquiry to the server 20 in Step S104, includes transfer guidance information which can be inquired about on the basis of the schedule information and the route information, for example. In addition, when a date and a time included in the schedule information correspond to a holiday, the section 12 makes an inquiry to the server 20 about event information corresponding to location information included in the schedule information.

Then, the receiving section 14 receives the search information about which the inquiry section 12 inquires in Step S104 (S106). As described above, the receiving section 14 receives the transfer guidance information and the event information. For example, the transfer guidance information includes route information, which shows the shortest distance at a current time, and a railway timetable. In addition, the event information corresponds to a time and a location for meeting and includes information relating to running time for a movie, for example.

Next, the notifying section 13 provides notification of, at a predetermined timing, the search information received by the receiving section 14 in Step S106 (S108). The notification performed by the notifying section 13 in Step S108 includes display of the search information on the display device or output from the audio output device, for example. Regarding the notification at the predetermined timing in Step S108, the notification may be performed at 30-minute intervals or in response to a user operation, for example. In addition, when a predetermined application such as a calendar is started up, the notification may be performed. Furthermore, when information provided by the receiving section 14 is different from previously notified information, the notification of the provided information may be performed.

In addition, the notifying section 13 may calculate an estimated time at which the user leaves home from the route information received by the receiving section 14 in Step S108. Then, when in Step S104 the inquiry section 12 makes an inquiry to the server 20 about cinema information at a predetermined location on a holiday, the notifying section 13 may cause the display device 16 to display the cinema information received from the server 20 as search information by the receiving section 14. In addition, the notifying section 13 may cause the display device 16 to display route information showing a route to a location at which an event is held and transfer guidance information in addition to event information such as the cinema information.

Next, the case that the receiving section 14 receives information other than the search information will be described with reference to Fig. 5. As shown in Fig. 5, first the receiving section 14 receives, from the server 20, information other than the search information about which the inquiry section 12 inquires (S202). The information, which is received in Step S202, other than the search information corresponds to accident information of a train relating to a route included in the setting information and weather information on a current day, for example. The receiving section 14 may receive accident information at fixed intervals or receive corresponding accident information when an accident happens. In addition, the receiving section 14 may receive the weather information at a predetermined time or in response to a user operation.

When in Step S202 the receiving section 14 receives information other than the search information, the inquiry section 12 makes an inquiry to the server 20 again (S204). The search information, about which the inquiry section 12 makes an inquiry to the server 20 in Step S204, includes transfer guidance information which can be inquired about on the basis of the schedule information and the route information, for example.

For example, when the information received by the receiving section 14 shows that it is difficult for the user to use a route used for a commuting route due to an accident, the inquiry section 12 makes an inquiry to the server 20 by using another route which is selected from the setting information stored in the memory section 15 and different from the usual commuting route. Therefore, the notifying section 13 can notify in real time the user of transfer guidance information coupled with accident information.

Next, the receiving section 14 receives, from the server 20, the search information as an result about which the inquiry section 12 inquires in Step S204 (S206). Then, when the notifying section 13 is provided with the search information received by the receiving section 14 in Step S206, the notifying section 13 performs processing in Step S208. Namely, the notifying section 13 determines whether or not the search information received in Step S206 is different from previously received search information (S208).

When in Step S208 it is determined that the newly received search information received is different from the previously received search information, the notifying section 13 provides notification of the newly received search information (S210). In addition, when in Step S208 it is determined that the newly received search information received is the same as the previously received search information, the notifying section 13 terminates processing without notifying.

When the receiving section 14 obtains information such as accident information, which is different from information at normal times, in Step S210 the notifying section 13 may calculate a departure time in light of the accident information and notify the user of the calculated departure time. In addition, when the notifying section 13 notifies the user of the accident information, the notifying section 13 may alert the user of the accident information by outputting an alarm tone. In addition, when the receiving section 14 provides accident information, the notifying section 13 may output an alarm at a time by a predetermined time earlier than at a usual time, the alarm being set at the usual time.

In addition, in Step S210 the notifying section 13 may notify the user of accident information and delay information of a train on weekdays and notify the user of traffic jam information on holidays. Then, the notifying section 13 may notify the user of news flash provided by the server 20 in the evening. In addition, the notifying section 13 may cause the display device to display the schedule information stored in the memory section 15.

In this way, according to the information processing apparatus 10, the desired search information, such as the transfer guidance information, can be displayed on the display device at a predetermined timing on the basis of the setting information such as the preliminarily input schedule. Namely, even though the user does not input search condition and make an inquiry to the server 20, the desired search information can be obtained.

Information such as the user's desired transfer guidance can be automatically obtained at suitable timing, simply by inputting the user's schedule preliminarily. In addition, when a train accident or a train delay happens in a commuting route, transfer guidance information coupled with accident information can be obtained. Therefore, the user can obtain, in real time, desired information without annoying input and search operations.

### [6] Display Examples of Display Device Coordinated with Information Processing Apparatus

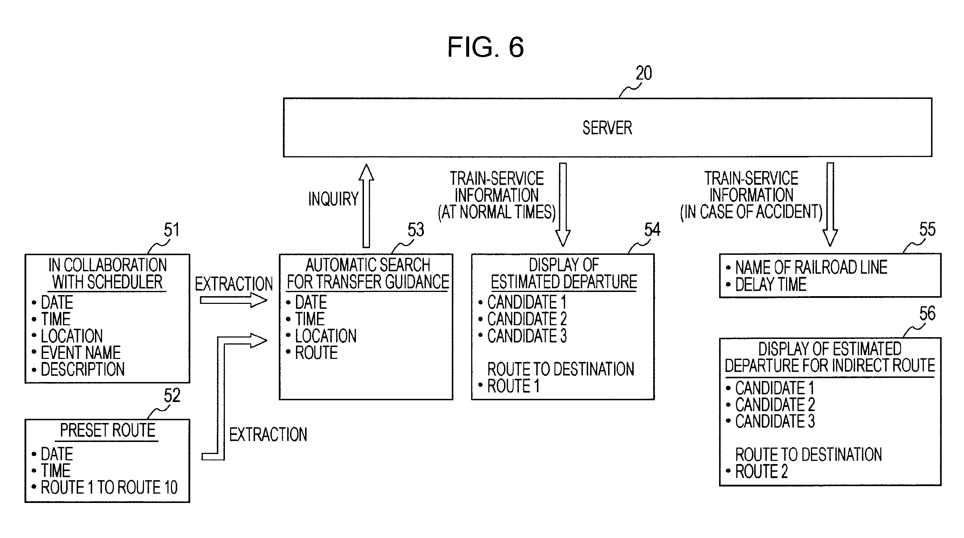

As above, the operations of the information processing apparatus were described. Next, display examples of the display device coordinated with the information processing apparatus 10 will be described with reference to Figs. 6 to 11. The display examples will be described together with an inquiry method according to a specific example shown in Fig. 6, the inquiry method being used to inquire about search information. Fig. 6 is an explanatory diagram illustrating the inquiry method performed in the information processing apparatus 10.

As shown in Fig, 6, the information processing apparatus 10 extracts information, such as dates, times, locations, and event names, from preliminarily input schedule information 51 in collaboration with an application such as a scheduler. In addition, the information processing apparatus 10 extracts dates, times, and routes from preliminarily input preset route 52. Then, the information processing apparatus 10 makes an inquiry to the server 20 by using information 53 used to automatically search transfer guidance such as dates, times, locations, and routes, the information 53 being selected from the extracted information.

Then, usually, when the information processing apparatus 10 obtains search information such as train-service information from the server 20, the information processing apparatus 10 notifies the user of search information 54, such as an estimated departure time and an optimum route to a destination, on the basis of preliminarily input route information. Furthermore, when an accident happens in transportation facilities, the information processing apparatus 10 receives accident information 55. In addition, the information processing apparatus 10 notifies the user of information 56, such as an estimated departure time corresponding to an indirect route and a route to a destination, the route being different from a usual route, on the basis of the accident information 55 and the preliminarily input preset route 52.

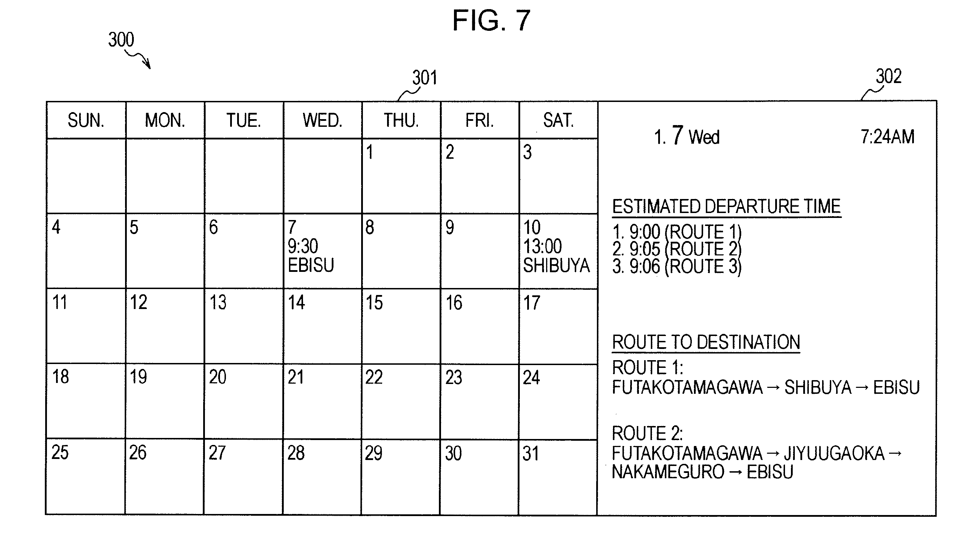

For example, a display screen 300 shown in Fig. 7 is a display example including the search information 54, the accident information 55, and the information 56. As shown in Fig. 7, on the display screen 300, search information 302, such as estimated departure times and routes to a destination, along with calendar display 301 including schedule information preliminarily input by the user.

As displayed on the display screen 300, for example, when schedule information which shows "drop in at Ebisu at 9:30 a.m. on Wednesday, January 7" is preliminarily input by the user, the date and time and the location included in the input schedule information are displayed on the corresponding day. Then, for example, at about 7:30 a.m. in morning hours on Wednesday, January 7, the search information 302 is displayed on the basis of the schedule information. The displayed search information 302 includes a plurality of candidates for estimated departure times desirable for the user's arrival at Ebisu at 9:30 a.m. In addition, routes from a station near the user's home to a destination are displayed on the basis of a preset route preliminarily input by the user.

In this way, the user has desired information, such as estimated departure times, displayed on the display device 16 on a corresponding day, simply by preliminarily inputting schedule information relating to a destination and a location. Therefore, even though, during busy hours in the morning before going to work, the user does not input search conditions, such as time to get to a destination and a location, to a retrieval screen and search for a departure time and a route, the user can obtain the desired information.

Furthermore, as described above, when a train accident happens in a commuting route, accident information may be displayed on a display location on which the search information 302 is displayed. Accordingly, since the user can obtain, in real time, information relating to the preliminarily input schedule information, convenience for the user is improved.

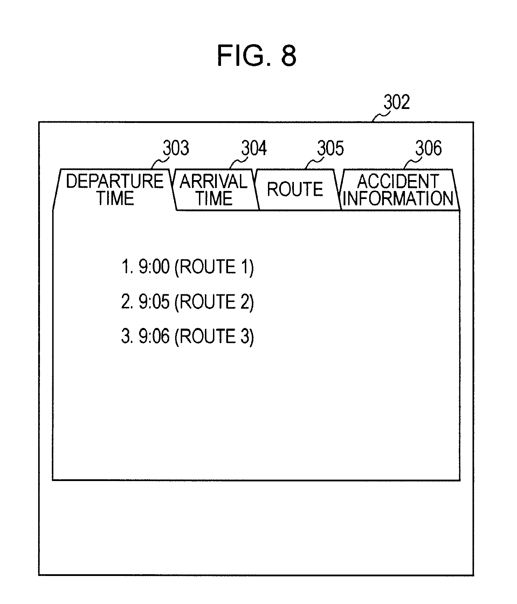

In addition, as shown in Fig. 8, the search information 302 may be displayed in a tab format. Therefore, when many different types of desired information are to be displayed in the search information 302, many different types of desired information can be browsed easily. For example, a first tab 303 to a fourth tab 306 may be displayed in order of priority of information of which the use is notified. For example, on the basis of the schedule information, a departure time is displayed in the first tab 303, an arrival time in the second tab 304, route information in the third tab 305, and accident information in the fourth tab 306.

For example, when a departure time or a route is changed, the tab 306 used for accident information may be displayed at the front side. Furthermore, when the tab 306 used for accident information is displayed at the front side, buzzer sound may be output so as to alert the user. As described above, when the information processing apparatus 10 receives accident information from the server 20, the information processing apparatus 10 displays search information coupled with the accident information in the tab 303 used for a departure time and the tab 305 used for a route, by calculating and searching a scheduled departure time and travel time along a route again. Therefore, when the user notices the buzzer sound, the user confirms the tab 306 for accident information. After that, the user can confirm whether or not a change exists, by confirming the tab 303 used for a departure time and the tab 305 used for a route.

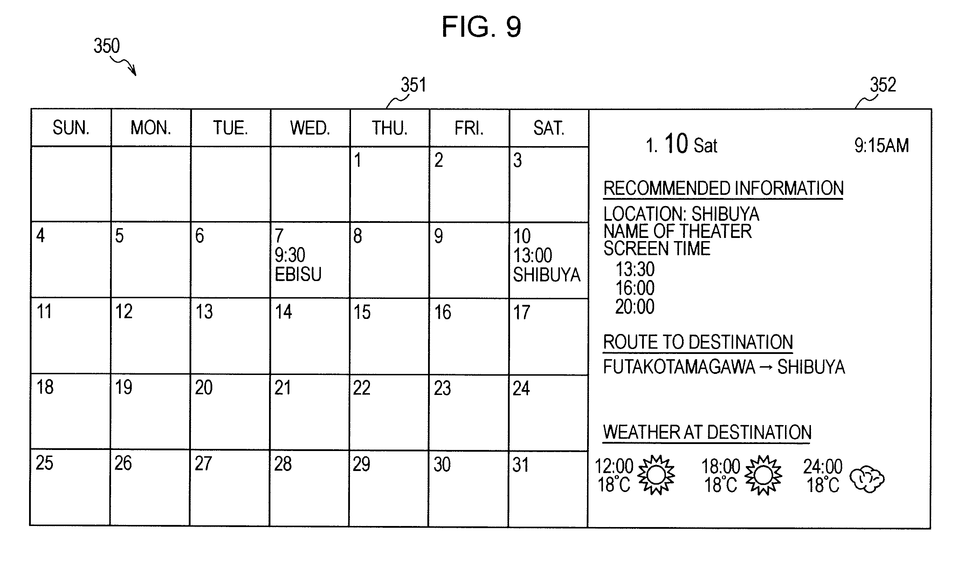

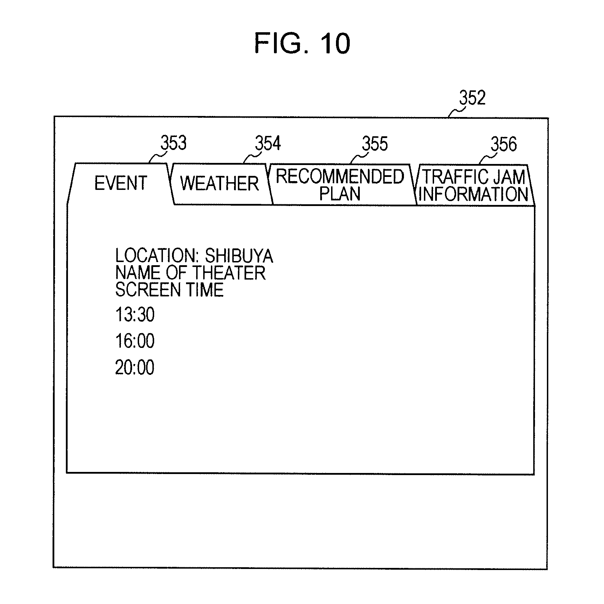

Next, a holiday display example displayed on the display device will be described with reference to Figs. 9 and 10. As shown in Fig. 9, search information 352, such as recommended information and route information, is displayed on a display screen 350, along with a calendar display 351 including schedule information preliminarily input by the user.

As displayed on the display screen 300, for example, when schedule information which shows "meet at Shibuya at 1:00 p.m. on Saturday, January 10" is preliminarily input by the user, the date and time and the location included in the input schedule information are displayed on the corresponding day. Then, for example, at about 9:00 a.m. in the morning on Saturday, January 10, the search information 352 is displayed on the basis of the schedule information. The displayed search information 352 includes recommended information such as information relating to a movie, which the user can watch after the user's arrival at Shibuya at 1:00 p.m., and event information. Then, a route from a station near the user's home to a destination is displayed on the basis of a preset route preliminarily input by the user. In addition, weather at a destination is displayed.

For example, the recommended information displayed in the search information 352 may be changed on the basis of weather at the destination. For example, when the weather is clear, information relating to an outdoor event may be displayed. When the weather is rainy, information relating to an indoor event may be displayed. In this way, simply by preliminarily inputting schedule information relating to a time for meeting and a location for meeting, the user can obtain event information suitable to the location for meeting if a corresponding day is a holiday. In addition, by preliminarily inputting the user's preference information, suitable event information coupled with the input preference information can be displayed on the display screen.

In addition, as shown in Fig. 10, the search information 352 may be displayed in the tab format. When a corresponding day is a holiday, a tab 353 used for event information, a tab 354 used for weather, a tab 355 used for a recommended plan, and a tab 356 used for traffic jam information may be displayed in layers.

For example, coupled with the user's preference information and the meeting location, a plan which is feasible from 1:00 p.m. to 6:00 p.m. may be displayed in the tab 355 used for a recommended plan. In addition, route information may be displayed along with the recommended plan, the route information being used to go to a location included in the recommended plan.

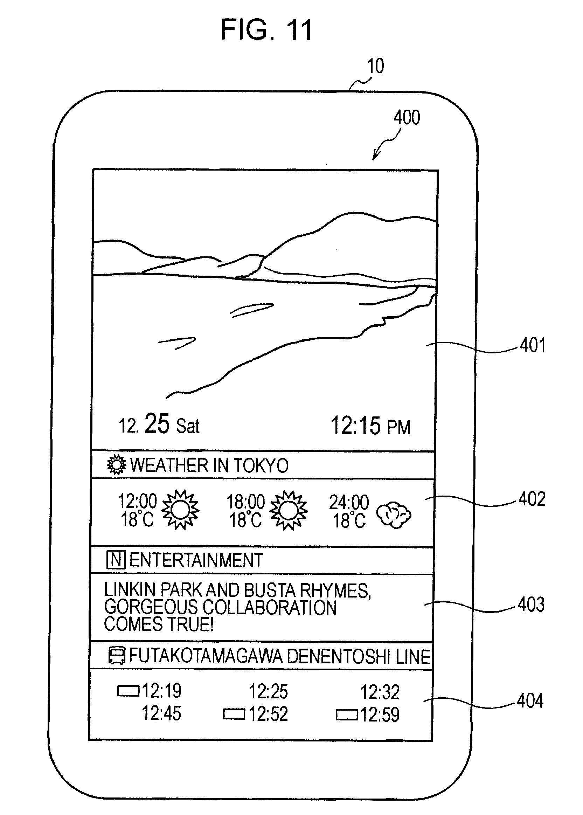

In addition, as shown in Fig. 1, when the information processing apparatus 10 has a photo-frame-like shape and can be set on its side or upright, a longitudinal display may be performed as shown in Fig. 11. As shown in Fig. 11, when a longitudinal display is performed, a plurality of search information may be displayed side-by-side on a display screen 400. Therefore, since the user can confirm many different types of search information at the same time, convenience for the user is improved.

Three types of search information such as weather information 402, event information 403, and railway timetable 404 are displayed on the display screen 400. These three types of search information may be changed to other search information at regular intervals. In addition, when a train accident happens, the train accident information may be displayed widely and distinctly on a photographic imagery part at the top of the display screen 400, so as to alert the user.

The information processing apparatus 10 according to the embodiment can make an inquiry to the server 20, which is connected to the network, about desired search information on the basis of setting information preliminarily input by the user. Then, the information processing apparatus 10 can notify, at a predetermined timing, the user of the search information received from the server 20. For example, the notification of the search information is performed by displaying the search information on the display device or outputting buzzer sound. The user can obtain the desired information in real time, simply by preliminarily inputting the schedule information.

As above, preferred embodiments of the present invention were described in detail with reference to figures. However, embodiments of the present invention are not limited to the above-described embodiments. It is obvious that one skilled in the art may employ various modifications and substitutions within the scope of the appended claims or the equivalents thereof. It should be noted that such modifications and substitutions are within the technical scope of the present invention.

For example, while the information processing apparatus 10 according to the embodiment can notify the user of the search information on the basis of the schedule information of the user who operates the information processing apparatus 10, embodiments according to the present invention are not limited to the above-described embodiments. For example, the information processing apparatus 10 may provide notification of the search information on the basis of somebody else's schedule relating to the user. For example, on the basis of somebody else's schedule, the information processing apparatus 10 may provide notification of a date and a time when somebody else's schedule is open or a date and a time when the user's schedule is dovetailed with somebody else's schedule. In addition, when the user and somebody else share common schedule information, a recommended plan may be provided on the basis of the user's schedule, somebody else's schedule, and places where their homes are located.

The present application contains subject matter related to that disclosed in Japanese Priority Patent Application JP 2009-032025 filed in the Japan Patent Office on February 13, 2009, the entire content of which is hereby incorporated by reference.

It should be understood by those skilled in the art that various modifications, combinations, sub-combinations and alterations may occur depending on design requirements and other factors insofar as they are within the scope of the appended claims or the equivalents thereof.

## Claims

1. An information processing apparatus comprising:
an inquiry section configured to make an inquiry to a server about desired search information on the basis of setting information preliminarily input by a user operation, the server being connected to a network;
a receiving section configured to receive the search information about which the inquiry section makes an inquiry to the server; and
a notifying section configured to provide notification of the search information, which is received by the receiving section, at a predetermined timing.

2. The information processing apparatus according to claim 1, wherein the information processing apparatus further includes an extraction section configured to extract predetermined information from the setting information preliminarily input by the user operation, the predetermined information being used by the inquiry section so as to inquire about the search information,
wherein the inquiry section makes an inquiry to the server about the desired search information on the basis of the predetermined information extracted by the extraction section.

3. The information processing apparatus according to claim 1 or 2, wherein the notifying section causes the search information to be displayed on a display device at a predetermined timing.

4. The information processing apparatus according to any one of claims 1 to 3, wherein
the receiving section receives other information in addition to the search information, and
the inquiry section makes an inquiry to the server about desired search information again when the receiving section receives information other than the search information.

5. The information processing apparatus according to any one of claims 1 to 4, wherein
when search information newly received by the receiving section is different from previously received search information, the notifying section provides notification of the newly received search information.

6. The information processing apparatus according to any one of claims 1 to 5, wherein
the setting information preliminarily input by the user operation includes the user's schedule information, and
the inquiry section inquires about predetermined guidance information on the basis of the schedule information included in the setting information.

7. The information processing apparatus according to any one of claims 2 to 6, wherein
the extraction section extracts the user's schedule information according to a current time from the setting information.

8. The information processing apparatus according to claim 6 or 7, wherein
the notifying section causes a calendar and predetermined guidance information to be displayed on the display device, the calendar including the user's schedule information, the predetermined guidance information being based on the schedule information inquired about by the inquiry section.

9. An information processing method comprising the steps of:
making an inquiry to a server about desired search information on the basis of setting information preliminarily input by a user operation, the server being connected to a network;
receiving the search information about which the server was inquired; and
providing notification of the search information, which is received by a receiving section, at a predetermined timing.

10. A recording medium storing a computer readable program configured to cause an information processing apparatus to execute processing, the information processing apparatus including:
an inquiry section configured to make an inquiry to a server about desired search information on the basis of setting information preliminarily input by a user operation, the server being connected to a network;
a receiving section configured to receive the search information about which the inquiry section makes an inquiry to the server; and
a notifying section configured to provide notification of the search information, which is received by the receiving section, at a predetermined timing.
